# EUROPÄISCHE PATENTSCHRIFT

(11) **EP 2 148 820 B1**
(45) Veröffentlichungstag und Bekanntmachung des Hinweises auf die Patenterteilung: **29.02.2012**
(21) Anmeldenummer: 07725707.9
(22) Anmeldetag: 31.05.2007
(51) Int. Cl.: B65D 30/20, B65D 33/06, B65D 33/20, B65D 33/25, B65D 75/62

(54) **FOLIENVERPACKUNGSBEUTEL**
SHEET-MATERIAL PACKAGING BAG
SAC D'EMBALLAGE EN FILM

(43) Veröffentlichungstag der Anmeldung: 03.02.2010
(73) Patentinhaber: Nordenia Deutschland Halle GmbH, 33790 Halle (DE)
(72) Erfinder: KUJAT, Marcus, verstorben (DE)
(74) Vertreter: Albrecht, Rainer Harald
(86) Internationale Anmeldenummer: PCT/EP2007/004823
(87) Internationale Veröffentlichungsnummer: WO 2008/145164

(56) Entgegenhaltungen:
- EP-A- 1 777 167
- WO-A-2004/092025
- WO-A2-2007/047393
- WO-A2-2007/047393
- DE-A1- 3 824 753
- DE-A1- 3 824 753
- DE-A1- 4 037 456
- DE-A1- 19 808 600
- DE-A1- 19 808 600
- DE-U1- 20 115 181
- DE-U1- 20 115 181
- DE-U1- 20 311 386
- DE-U1- 20 311 386
- US-A- 3 642 189
- US-A- 5 716 473
- US-A1- 2003 202 720
- US-A1- 2003 202 720
- US-A1- 2006 108 375
- BISCHOF + KLEIN GMBH & CO. KG: "U-Pack ® mit Tragegriff", DAS MAGAZIN VON BISCHOF + KLEIN - FÜR MITARBEITER UND FREUNDE DES HAUSES, no. 2/06, December 2006 (2006-12), D-49525 Lengerich
- BISCHOF + KLEIN GMBH & CO. KG: "U-Pack ® mit Tragegriff", DAS MAGAZIN VON BISCHOF + KLEIN - FÜR MITARBEITER UND FREUNDE DES HAUSES, no. 2/06, December 2006 (2006-12), D-49525 Lengerich

## Beschreibung

Die Erfindung betrifft einen Folienverpackungsbeutel gemäß dem Oberbegriff des Patentanspruches 1.

Ein Folienverpackungsbeutel mit dem gattungsbildenden Aufbau eignet sich zum Verpacken von Schüttgütern, beispielsweise Trockenfutter für Tiere, und weist eine Wiederverschlusseinrichtung auf, die es erlaubt, den Inhalt der Verpackung in Teilmengen auszuschütten bzw. zu entnehmen. Neben pelletierter Tiernahrung kommen als Verpackungsgüter beispielsweise auch Waschmittel, Katzenstreu, Streusalz und pulvrige oder körnige Baumaterialien in Betracht. Nach dem Öffnen des Folienverpackungsbeutels an einem Beutelabschnitt oberhalb des Wiederverschlusses kann eine Verschmutzung des Füllgutes durch den Wiederverschluss vermieden werden, wobei dieser auch einen Feuchtigkeitsschutz und bei Lebensmitteln und Tiernahrung auch einen gewissen Aromaschutz gewährleistet. Die Entnahme des Füllgutes erfolgt durch eine Öffnung in der ersten Seitenfalte, wobei die Seitenfalte nach Öffnen der Wiederschlusseinrichtung herausziehbar ist und als Schütte genutzt werden kann. Die Öffnung ist verschließbar. Die Wiederverschlusseinrichtung kann als so genannter Zipperverschluss ausgeführt werden, der leistenförmige Nut- und Federelemente aufweist, die manuell durch Druck verbunden werden können und eine Rast- bzw. Clipsverbindung bilden. Auch andere Wiederverschlüsse, z.B. Klettverschlüsse oder Wiederverschlüsse mit einem selbstklebenden Streifen, sind denkbar.

Ein Folienverpackungsbeutel mit Faltkanten, welche durch Längssiegelnähte versteift sind, ist aus der Druckschrift WO 2004/092025 A2 bekannt. Er besteht aus einer zu einem Schlauch gefalteten Folie. Der durch Falten erzeugte Schlauch weist einliegende Seitenfalten auf und ist mantelseitig mittels einer Längssiegelnaht und an seiner Oberseite durch eine Kopfsiegelnaht verschlossen. Unterhalb der Kopfsiegelnaht ist an der ersten Seitenfalte ein Wiederverschluss angeordnet, der von einem durchgehenden Wiederverschlussstreifen gebildet ist. Der W-förmig gefaltete Wiederverschlussstreifen ist an der ersten Seitenfalte angeordnet und nicht mit sich selbst versiegelt. Der Wiederverschlussstreifen ist länger als die Breite der Seitenfalte und an der Innenseite der Seitenfalte sowie den angrenzenden Beutelflächen, welche die Front- und Rückfläche des Verpackungsbeutels bilden, befestigt. Zum erstmaligen Gebrauch wird ein Beutelabschnitt oberhalb des an der Beutelinnenseite angeordneten Wiederverschlusses entlang einer Schwächungslinie aufgerissen. Zur Entnahme des Verpackungsgutes wird dann die erste Seitenfalte im Bereich des Wiederverschlusses ausgeklappt, wobei eine wiederverschließbare Schütte gebildet wird. Zum Wiederverschließen des Folienverpackungsbeutels bleibt der obere Abschnitt der ersten Seitenfalte im ausgeklappten Zustand, wobei der Wiederverschlussstreifen dann U-förmig verläuft.

Ein ähnlicher Seitenfaltenbeutel ist aus der Druckschrift DE 201 15 181 U1 bekannt, wobei neben einer Wiederverschlusseinrichtung ein Tragegriff zur besseren Handhabung des Beutels vorgesehen ist.

Aus der Druckschrift DE 203 11 386 U1 ist ein weiterer Folienverpackungsbeutel mit einem aus einem Folienstreifen gebildeten Tragegriff bekannt. Der Folienstreifen ist in einer oberen Hälfte des Folienverpackungsbeutels angeordnet und mit seinen beiden Enden mit einer Seitenwand des Beutels verbunden. Der Folienverpackungsbeutel kann auch als Seitenfaltenbeutel mit einer Frontfläche, einer Rückfläche und zwei Seitenfalten ausgebildet sein, wobei dann am oberen Rand des Beutels ein Wiederverschluss vorgesehen ist und wobei der Folienstreifen nahe des Wiederverschlusses am oberen Rand des Behälters angeordnet ist.

Aus dem Magazin "für Mitarbeiter und Freunde des Hauses" der Bischoff + Klein GmbH & Co. KG Nummer 2/06 ist ein Folienverpackungsbeutel mit Seitenfalten bekannt, der an einer Seitenfalte einen Tragegriff und an seinem Kopf über die gesamte Breite einen Slider-Verschluss aufweist. Bei einem Slider-Verschluss werden Profilstreifen durch einen Schieber betätigt, weshalb die Anordnung unmittelbar an dem Beutelkopf erfolgt, damit der schieberfrei ist.

Ein Folienverpackungsbeutel mit den Merkmalen des Oberbegriffes des Patentanspruches 1 ist aus der WO 2007/047393 A2 bekannt. Ausgehend von dem in der WO 2004/092025 A2 bekannten Folienverpackungsbeutel wird vorgeschlagen, die Außenkanten zwischen der ersten Seitenfalte und der angrenzenden Front- bzw. Rückwand als Faltkanten auszubilden und diese unterhalb sowie oberhalb der Wiederverschlusseinrichtung durch Längssiegelnähte zu verstärken. Oberhalb des Wiederverschlusses ist eine Schwächungslinie dort vorgesehen, wo die Längssiegelnähte unterbrochen sind. Als Vorteil wird beschrieben, dass der mit den oberen Längssiegelnahtabschnitten versehene Kopfbereich vollständig entfernt werden kann. Bei dem bekannten Seitenfaltenbeutel ergibt sich der Nachteil, dass bei dem Abreißen des Endabschnittes zum Freilegen der Wiederverschlusseinrichtung vier übereinander liegende Schichten der Beutelfolie durchtrennt werden müssen. Das Öffnungsverhalten ist deshalb verbesserungswürdig. Zusätzlich muss vermieden werden, dass die Dichtheit des ungeöffneten Beutels durch die Schwächungslinie übermäßig beeinträchtigt wird.

Vor diesem Hintergrund liegt der Erfindung die Aufgabe zugrunde, einen Folienverpackungsbeutel anzugeben, der insgesamt leicht zu handhaben ist und vor sowie nach einem erstmaligen Öffnen möglichst dicht verschlossen ist.

Gegenstand der Erfindung und Lösung der Aufgabe ist ein Folienverpackungsbeutel gemäß Patentanspruch 1.

Nach einem erstmaligen Öffnen des Beutels und einem Herausklappen der von der ersten Seitenfalte gebildeten Schütte kann der an dem Tragegriff gehaltene Beutel mit einem geringen Kraftaufwand leicht verkippt werden, wobei auch ohne besonderes Geschick eine genaue Portionierung des ausgeschütteten Verpackungsgutes möglich ist. Durch die Anordnung des Tragegriffs entlang der Längsrichtung der zweiten Seitenfalte kann die Ruhelage des an dem Tragegriff gehaltenen Folienverpackungsbeutels variiert werden. Ist der Trage griff in Längsrichtung der zweiten Seitenfalte mittig angeordnet, verlaufen bei einem vollständig gefüllten Folienverpackungsbeutel in der Ruhelage die erste Seitenfalte und die zweite Seitenfalte in etwa horizontal. Bei einer Verlagerung des Tragegriffs in Richtung des Bodens des Folienverpackungsbeutels wird die Schütte in der Ruhelage abgesenkt. Während bei einer mittigen Anordnung des Tragegriffs der Folienverpackungsbeutel besonders komfortabel getragen werden kann, erlaubt eine außermittige zum Boden des Folienbeutels versetzte Anordnung des Tragegriffs auf besonders einfache Weise eine vollständige Entleerung des Folienverpackungsbeutels. Der Tragegriff verläuft zweckmäßigerweise in Längsrichtung der zweiten Seitenfalte.

Im Rahmen der Erfindung können die Frontfläche, die Rückfläche und die beiden Seitenfalten jeweils als separater Folienabschnitt bereitgestellt und zur Bildung des Folienverpackungsbeutels zusammengefügt werden. In einer bevorzugten Ausgestaltung der Erfindung ist jedoch vorgesehen, dass die Frontfläche, die Rückfläche und die Seitenfalten durch Falten einer zumindest zweischichtigen Beutelfolie geformt sind, wobei die Beutelfolie an der Beutelinnenseite eine Schicht aus einem siegelfähigen Kunststoff und der Außenseite vorzugsweise eine Schicht aus einem nicht siegelfähigen Material aufweist. Die Innenfläche der Beutelfolie kann beispielsweise aus einem gut siegelbaren Polyolefin gebildet sein. Als Beutelfolie sind beispielsweise Verbundfolien mit einer Außenfläche aus Polyethylenterephthalat (PET) und einer Innenfläche aus Polyethylen (PE) geeignet. Zwischen der Innenfläche und der Außenfläche können ohne Einschränkungen zur Erhöhung der Stabilität und/oder der Barrierewirkung weitere Folienschichten angeordnet sein. Um eine besonders gute Barrierewirkung in Bezug auf verschiedene Gase, Feuchtigkeit und Aromen zu erreichen, kann beispielsweise eine dünne Metallschicht vorgesehen sein. Auch Verbundmaterialien mit Schichten aus unterschiedlichen Polymeren können im Rahmen der Erfindung eingesetzt werden, wobei vorzugsweise die Polymerzusammensetzung der Innenfläche derart ausgeführt ist, dass bei einer geeigneten Siegeltemperatur nur die Innenfläche aufschmilzt. Geeignet sind beispielsweise Verbundmaterialien aus coextrudiertem Polyethylen oder mehrlagig laminierte Folienbahnen aus hochdichtem Polyethylen (HDPE). Derartige Folien zeichnen sich durch eine hohe Zug-, Reiß- und Durchschlagfestigkeit aus. Erfindungsgemäß kann auch der gesamte Folienbeutel aus Polyethylen gefertigt sein und deshalb leicht recycelt werden.

Die an der Außenfläche liegende Folienschicht ist typischerweise an ihrer Außen- oder Innenseite bedruckt. Bei einem Aufdruck auf der Innenseite wird dieser vor einer Lamination der Außenschicht mit zumindest einer weiteren, innen liegenden Schicht aufgebracht und ist bei dem gefertigten Folienverpackungsbeutel durch seine innen liegende Anordnung gegenüber Abrieb geschützt. Bei einem Aufdruck auf der Außenseite kann optional eine dünne Schicht eines Schutzlackes vorgesehen sein um das Druckbild zu schützen. Da die Wiederverschlusseinrichtung beutelinnenseitig an der ersten Seitenfalte und der Tragegriff an der zweiten Seitenfalte angeordnet sind, werden der optische Eindruck und die Druckbilder auf der Vorder- und Rückwand des Verpackungsbeutels durch die genannten Handhabungseinrichtungen nicht beeinträchtigt.

Für den Tragegriff ergeben sich im Rahmen der vorliegenden Erfindung verschiedene bevorzugte Ausgestaltungen. Im Rahmen einer ersten bevorzugten Ausgestaltung des Tragegriffs ist dieser als separater Folienstreifen auf die Außenseite der zweiten Seitenfalte aufgeklebt oder, falls die Außenseite der zweiten Seitenfalte heißsiegelbar ist, aufgesiegelt. Die Anordnung des Tragegriffs erfolgt im Rahmen dieser Ausgestaltung auf besonders einfache Weise, wobei auch die Dichtigkeit des Folienverpackungsbeutels im Bereich des Tragegriffs nicht eingeschränkt ist.

Im Rahmen einer zweiten Ausgestaltung des Tragegriffs weist die zweite Seitenfalte zwei Schlitze auf, wobei der Tragegriff zumindest aus dem randseitig von den Schlitzen begrenzten Abschnitt der Seitenfalte gebildet ist und wobei der Bereich des Tragegriffs an der Beutelinnenfläche von zumindest einem Abdeckfolienabschnitt abgedeckt ist. Der Abschnitt der Seitenfalte bildet dabei eine in die Außenfläche des Folienverpackungsbeutels integrierte Griffschlaufe, wobei die durch die Schlitze gebildete Öffnung an der Beutelinnenseite von einem Abdeckfolienabschnitt abgedeckt ist. Im Rahmen dieser Ausgestaltung ist die Griffschlaufe von der zweiten Seitenfalte selbst gebildet, weshalb eine aufwendige Zuführung und genaue Positionierung eines die Griffschlaufe bildenden Folienstreifens nicht erforderlich ist. Die die Griffschlaufe randseitig begrenzenden Schlitze können bei der Herstellung des Folienverpackungsbeutels auf besonders einfache Weise durch Stanzen, Schneiden oder dergleichen erzeugt werden. Der Abdeckfolienabschnitt kann beispielsweise durch Heißsiegeln mit der Innenfläche der Folie verbunden sein, wobei für einen dichten Verschluss vorzugsweise eine randseitig umlaufende, geschlossene Siegelnaht vorgesehen ist.

Die Schlitze können in einer besonders leicht zu realisierenden Ausführung der Erfindung als gerade, parallel verlaufende Linien ausgebildet sein, wobei jedoch ohne Einschränkung, beispielsweise zur Optimierung der Traglast, ein bogenförmiger Verlauf vorgesehen werden kann. Im Rahmen einer bevorzugten weiteren Ausgestaltung der beschriebenen Ausführung des Tragegriffs ist im Bereich der Griffschlaufe ein Verstärkungsblatt an der Beutelinnenseite befestigt, wobei die Griffschlaufe aus dem randseitig von den Schlitzen begrenzten Abschnitt der Beutelfolie und des Verstärkungsblattes gebildet ist. Durch das vorzugsweise durch Heißsiegeln auf der Innenfläche der zweiten Seitenfalte befestigte Verstärkungsblatt kann die Belastbarkeit der Griffschlaufe erhöht werden, so dass auch schwere Folienverpackungsbeutel sicher transportiert werden können. Eine besondere hohe Traglast kann erreicht werden, wenn die Schlitze jeweils zwischen zwei Siegelnähten, mit denen das Verstärkungsblatt auf der Innenfläche der zweiten Seitenfalte aufgesiegelt ist, angeordnet sind. Um einen besonders dichten Verschluss zu gewährleisten, deckt der Abdeckfolienabschnitt vorzugsweise das Verstärkungsblatt vollständig ab, wobei das Verstärkungsblatt von einer umlaufenden, in sich geschlossenen Siegelnaht zwischen Abdeckfolienabschnitt und Beutelinnenseite umgeben ist.

Im Rahmen einer weiteren alternativen Ausgestaltung ist der Tragegriff von einem separaten Folienstreifen gebildet, der direkt oder über ein Trägerblatt an der Innenseite der zweiten Seitenfalte befestigt ist und der bei Gebrauch durch eine Öffnung in der zweiten Seitenfalte zugänglich ist, wobei der Bereich des Tragegriffs an der Beutelinnenfläche von zumindest einem Abdeckfolienabschnitt abgedeckt ist.

Der Folienstreifen kann beispielsweise mit seinen beiden Enden an der Innenseite der zweiten Seitenfalte durch Kleben oder Heißsiegeln befestigt sein, wobei ein mittiger Griffabschnitt des Folienstreifens durch die Öffnung in der zweiten Seitenfalte zugänglich ist. Im Rahmen einer bevorzugten weiteren Ausgestaltung ist jedoch vorgesehen, dass der Folienstreifen über ein Trägerblatt, welches breiter als der Folienstreifen ist, mit der Beutelinnenseite verbunden ist, wobei der Folienstreifen in Längsrichtung zwischen zwei um das Trägerblatt gefalteten Streifenenden einen mittigen Griffabschnitt aufweist und wobei das Trägerblatt seitlich des Folienstreifens mittelbar oder unmittelbar mit der Beutelinnenseite verbunden ist. Im Rahmen einer solchen Ausgestaltung ist der Folienstreifen nicht direkt sondern über das Trägerblatt mit der Beutelfolie verbunden, wobei die beim Tragen des Folienverpackungsbeutels auf den Tragegriff wirkende Kraft zunächst auf das Trägerblatt und damit auf eine große Fläche seitlich des Folienstreifens verteilt wird. Durch die gleichmäßigere Kraftverteilung kann im Vergleich zu den bekannten Ausführungen unter Verwendung der gleichen Folienmaterialien für die Beutelfolie und den Folienstreifen die Traglast deutlich erhöht werden.

Um eine besonders hohe Tragfähigkeit des Tragegriffs zu erreichen, überlappen sich vorzugsweise die umgefalteten Streifenende abschnittsweise und sind im Überlappungsbereich, beispielsweise durch Heißsiegeln, verbunden, so dass der Folienstreifen eine geschlossene Schlaufe bildet. Die Streifenenden können dabei optional auch direkt durch Heißsiegeln oder Verkleben an dem Trägerblatt fixiert sein. Im Rahmen der Erfindung liegt darüber hinaus auch, dass die Streifenenden nicht direkt miteinander sondern nur mit dem Trägerblatt verbunden sind.

Das Trägerblatt und der Folienstreifen sind an der Beutelinnenseite von zumindest einem Abdeckfolienabschnitt abgedeckt. Der Abdeckfolienabschnitt dient dem dichten Verschluss des Folienverpackungsbeutels im Bereich des Tragegriffs, wobei zumindest die Knickstellen des Folienstreifens von einem durchgehenden Abdeckfolienabschnitt oder von zwei Abdeckfolienabschnitten abgedeckt sind.

Um den Griffabschnitt an der Beutelaußenseite ergreifen zu können, kann die Beutelfolie im Bereich des Trägergriffs seitlich des Griffabschnittes verlaufende Einschnitte oder eine Öffnung in Form einer Ausstanzung aufweisen, durch die hindurch der Griffabschnitt zugänglich ist. Des weiteren kann im Bereich des Trägergriffs eine Schwächungslinie oder Perforation vorgesehen sein, wobei der Griffabschnitt durch das Öffnen der Schwächungslinie der Perforation freigebbar ist. Die Schwächungslinie oder Perforation ist vorzugsweise in sich geschlossen, so dass der von der Schwächungslinie oder Perforation begrenzte Folienabschnitt vollständig aus der die zweite Seitenfalte bildenden Folie herausgetrennt werden kann. Der Folienabschnitt kann dabei durch Heißsiegelnähte und/oder Klebstoff mit dem Griffabschnitt verbunden sein, wobei der herausgetrennte Folienabschnitt dann nach dem Öffnen auf dem Griffabschnitt verbleibt und nicht als separates Teil entsorgt werden muss. Die zweite Seitenfalte, der Folienstreifen, das Trägerblatt und das Verschlussblatt werden vorzugsweise durch Heißsiegeln miteinander verbunden. Grundsätzlich ist jedoch auch ein Verkleben oder eine Kombination von Kleben und Heißsiegeln möglich. Um eine besonders hohe Traglast des Trägerstreifens zu erreichen, kann dieser beispielsweise aus zwei aufeinander gefalteten und miteinander versiegelten Lagen gebildet sein.

Vor dem erstmaligen Öffnen des Folienverpackungsbeutels verläuft der Wiederverschluss W-förmig an der ersten Seitenfalte und den angrenzenden Abschnitten der Front- und Rückfläche. Um den Folienverpackungsbeutel ein erstes Mal zu öffnen, ist oberhalb des Wiederverschlusses eine Schwächungslinie vorgesehen, entlang der ein Endabschnitt des Folienverpackungsbeutels abgerissen werden kann, so dass der Wiederverschluss zugänglich ist. Zur Entnahme von Füllgut wird die von der ersten Seitenfalte gebildete wiederverschließbare Schütte nach außen geklappt. Die von der ersten Seitenfalte gebildete Schütte ist zur Ermöglichung des Wiederverschlusses wieder zwischen die Frontfläche und die Rückfläche einklappbar, wobei die Wiederverschlusseinrichtung die erste Seitenfalte lösbar mit der benachbarten Frontfläche und der Rückfläche verbindet. Die Außenkanten zwischen der ersten Seitenfläche und der angrenzenden Front- bzw. Rückfläche sind als Faltkanten ausgebildet, die durch Längssiegelnähte versteift sind und die sich bis zur Kopfsiegelnaht erstrecken. Die Längssiegelnähte dienen dabei nicht nur zur Versteifung des Folienverpackungsbeutels sondern geben in Bezug auf die erste Seitenfalte die bevorzugte W-förmige Anordnung der Wiederverschlusseinrichtung im eingeklappten Zustand der ersten Seitenfalte vor. Um den Folienverpackungsbeutel weiter zu verstärken und auch nach dem erstmaligen Öffnen eine gute Dichtigkeit zu gewährleisten, kann an die Wiederverschlusseinrichtung eine Siegelnaht angrenzen, welche die Front- und Rückfläche des Folienverpackungsbeutels verbindet und sich bis zur Kopfsiegelnaht oder bis zur zweiten Seitenfalte erstreckt. Die zusätzliche Siegelnaht begrenzt dabei die wiederverschließbare Schütte.

Oberhalb der Wiederverschlusseinrichtung ist eine Schwächungslinie vorgesehen, die aus einer Kombination einer durch Heißsiegeln gebildeten Prägelinie und einer in die Außenschicht der Verbundfolie eingebrachten und die Prägelinie überlagernden Lasernaht besteht. Durch das Heißsiegeln wird die Folie unter Einwirkung von Druck und Temperatur verformt und im Laserverfahren erfolgt im Bereich der Prägelinie ein partieller Materialabtrag an der Außenseite der Folie. Die Kombination einer Lasernaht mit einer heißsiegelbaren Prägelinie ergibt eine Schwächungslinie, die sich durch ein sehr gutes Aufreißverhalten auszeichnet. Das Aufreißen ist leichtgängig und erfolgt mit einer definierten Ausbreitung entlang der Schwächungslinie. Dadurch, dass der Laserabtrag auf die Außenschicht der Folie beschränkt ist, bleibt die Schwächungslinie luftdicht. Die Permeation von Sauerstoff und Wasserstoff durch den Bereich der Schwingungslinie ist vernachlässigbar. Dort, wo die Schwächungslinie die durch Längssiegelnähte verstärkten Faltkanten erreicht, sind Kerben in den Längssiegelnähten zur Rissinitiierung vorgesehen.

Die Schwächungslinie kann sich parallel zu der Wiederverschlusseinrichtung und einer daran anschließenden Quersiegelnaht, welche den Füllgutraum oberseitig schließt, über die gesamte Breite des Folienbeutels bis zu den Rändern der zweiten Seitenfalte erstrecken. Im Rahmen der Erfindung liegt aber auch, dass die Schwächungslinie sich parallel zu der Wiederverschlusseinrichtung erstreckt und dann mit einem vertikalen oder schräg verlaufenden Abschnitt zur Kopfsiegelnaht ausläuft.

Die Wiederverschlusseinrichtung ist vorzugsweise durch einen Zipperverschluss gebildet und weist einen an der Beutelinnenfläche des Beutels befestigbaren Folienträger und an den Folienträger angeformte leistenförmige Verschlusselemente auf. Die leistenförmigen Verschlusselemente sind nach Art einer Nut- und Federverbindung durch Druck manuell miteinander verrastbar, wobei im Rahmen der Erfindung sowohl mit sich selbst verschließbare Wiederverschlussstreifen oder männliche Wiederverschlussstreifen mit zumindest einem Vorsprung und zugeordnete weibliche Wiederverschlussstreifen mit zumindest einer Aufnahme für den Vorsprung vorgesehen sein können. Der Folienträger ist zweckmäßigerweise mit zwei Siegelnähten, die beidseits der leistenförmigen Verschlusselemente angeordnet sind, mit der den Folienverpackungsbeutel bildenden Folie verbunden. Neben manuell verrastbaren Wiederverschlusseinrichtungen sind im Rahmen der Erfindung jedoch auch andersartige Wiederverschlusseinrichtungen wie beispielsweise selbstklebende Wiederverschlussstreifen oder Klettverschlüsse geeignet.

Hinsichtlich des Anbringens der Wiederverschlusseinrichtung ergeben sich mehrere Möglichkeiten. Eine bevorzugte Ausführung der Erfindung sieht vor, dass die Länge der Wiederverschlusseinrichtung größer ist als die Breite der ersten Seitenfalte, wobei ein mittlerer Abschnitt der Wiederverschlusseinrichtung an der Innenfläche der Seitenfalte befestigt ist und wobei daran beidseitig anschließende Endabschnitte der Wiederverschlusseinrichtung mit der Innenseite der Frontfläche bzw. der Rückfläche des Beutels verbunden sind. Im Rahmen der Erfindung liegt es aber auch, dass an der Innenfläche der ersten Seitenfläche ein erster Wiederverschlussstreifen angeordnet ist, der sich bis zu den Außenkanten des Beutels erstreckt und mit zugeordneten Wiederverschlussstreifen zusammenwirkt, die an der Frontfläche und der Rückfläche befestigt sind. Geeignete Profile für die Wiederverschlussstreifen sind beispielsweise in DE 201 15 181 U1 beschrieben.

Gemäß einer vorteilhaften Ausgestaltung der Erfindung sind alle vier Außenkanten des Folienbeutels durch Längssiegelnähte versteift. Wenn der Folienverpackungsbeutel durch das Falten einer Beutelfolie geformt wird, kann die den Folienverpackungsbeutel mantelseitig schließende Längssiegelnaht ohne Einschränkung entlang der Front- oder Rückfläche verlaufen oder in eine Kante, welche eine der Seitenfalten begrenzt, integriert werden. Im Rahmen einer solchen Ausführung kann beispielsweise die den Folienverpackungsbeutel mantelseitig schließende Längssiegelnaht die zweite Seitenfalte mit der Front- oder Rückfläche des Beutels verbinden.

Im Folgenden wird die Erfindung anhand einer lediglich ein Ausführungsbeispiel darstellenden Zeichnung erläutert. Es zeigen schematisch
- Fig. 1: eine Seitenansicht eines noch original verschlossenen Folienverpackungsbeutels mit einer Schütte und einem Tragegriff,
- Fig. 2: eine alternative Ausgestaltung des Folienverpackungsbeutels im geöffneten Zustand in einer perspektivischen Darstellung,
- Fig. 3: einen Schnitt durch den geöffneten Folienverpackungsbeutel in der Schnittebene A-A der Fig. 2,
- Fig. 4: eine bevorzugte Ausgestaltung des Tragegriffs in einer Detailansicht,
- Fig. 5: eine perspektivische Ansicht einer alternativen bevorzugten Ausgestaltung des Tragegriffs,
- Fig. 6: eine Schnittdarstellung entlang der Linie B-B der Fig. 5 mit einer ungeöffneten Perforation.

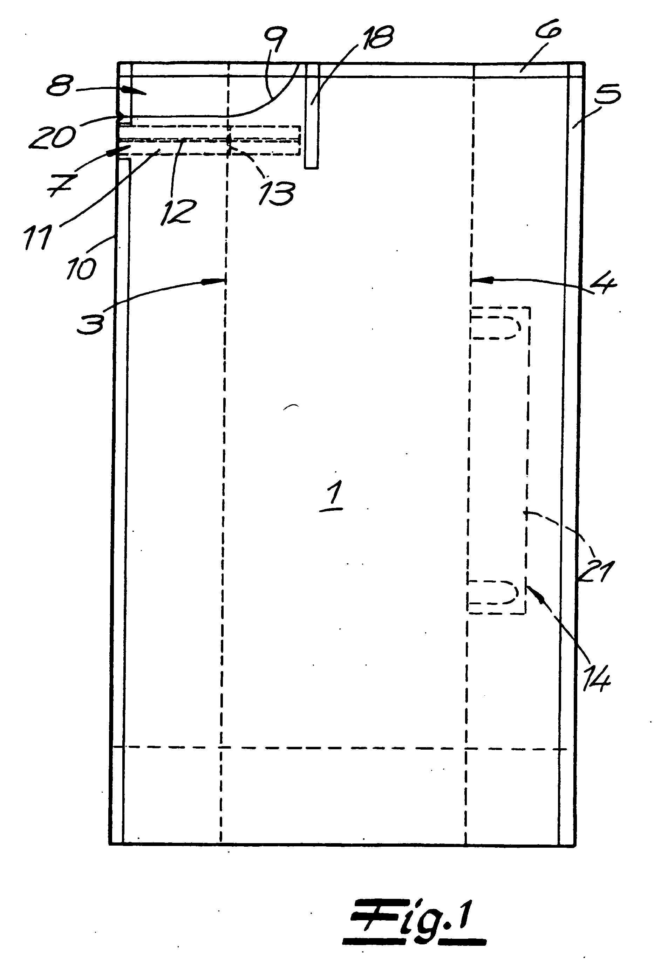

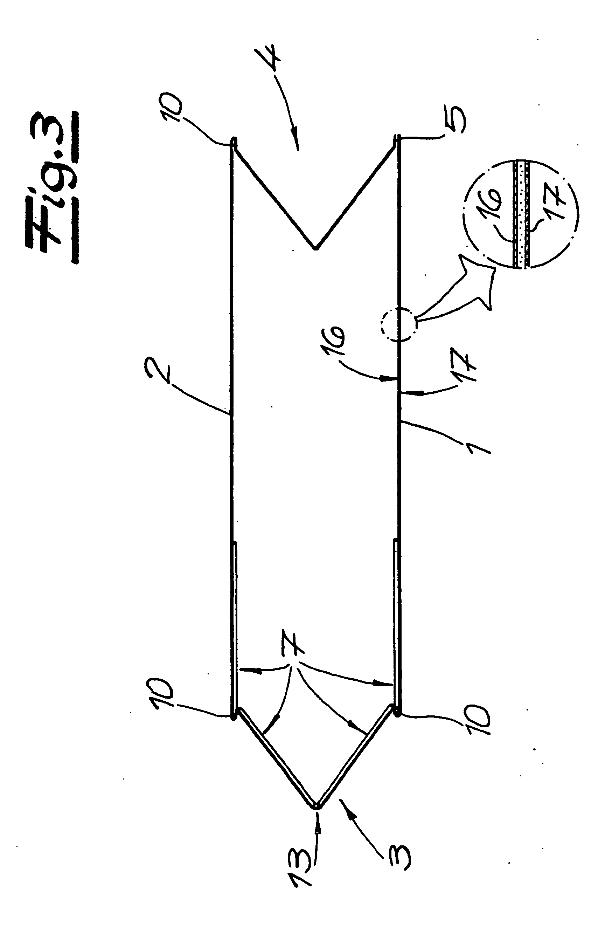

Der in den Figuren dargestellte Folienverpackungsbeutel ist durch Falten einer Beutelfolie geformt und weist eine Frontfläche 1, eine Rückfläche 2, eine eingelegte erste Seitenfalte 3 sowie eine eingelegte zweite Seitenfalte 4 auf. Der Folienverpackungsbeutel ist durch eine Längssiegelnaht 5, eine Kopfsiegelnaht 6 und eine nicht dargestellte Bodensiegelnaht verschlossen. An der Innenfläche des Folienverpackungsbeutels ist unterhalb der Kopfsiegelnaht ein Wiederverschlussstreifen 7 als Wiederverschlusseinrichtung befestigt, der die erste Seitenfalte 3 lösbar mit der benachbarten Frontfläche 1 und Rückfläche 2 des Beutels verbindet, wobei die Wiederverschlusseinrichtung vor dem erstmaligen Öffnen des Folienverpackungsbeutels geschlossen ist. Zur Füllgutentnahme wird ein Beutelabschnitt 8 oberhalb des Wiederverschlussstreifens 7 entlang einer in der Beutelfolie enthaltenen Schwächungslinie 9 aufgerissen. Danach bildet die erste Seitenfalte 3 eine wiederverschließbare, herausklappbare Schütte. Aus einer vergleichenden Betrachtung der Fig. 1 bis 3 wird deutlich, dass die Faltkanten 10 zwischen der ersten Seitenfalte 3 und der angrenzenden Front- bzw. Seitenfläche 1, 2 durch Längssiegelnähte versteift sind. Die Längssiegelnähte erstrecken sich von einer nicht dargestellten Bodensiegelnaht bis zur Kopfsiegelnaht 6 und sind im Bereich des Wiederverschlussstreifens 7 unterbrochen. Auch die zweite Seitenfalte 4 ist von Außenkanten begrenzt, die durch Längssiegelnähte verstärkt sind. Der Querschnittdarstellung in Fig. 3 entnimmt man, dass die den Folienbeutel mantelseitig schließende Längssiegelnaht 5 in die zweite Seitenfalte 4 hinein verlegt ist und die zweite Seitenfalte 4 mit der Front- oder Rückfläche 1, 2 des Beutels verbindet. Die Längssiegelnaht 5 erfüllt eine Dichtungsfunktion, während die den anderen Außenkanten zugeordneten Siegelnähte lediglich die Faltkanten 10 verstärken und keine Dichtungsfunktion haben.

Der Wiederverschlussstreifen 7 weist einen an der Innenfläche des Folienverpackungsbeutels befestigten Folienträger 11 und an den Folienträger 11 angeformte leistenfömige Verschlusselemente 12 auf, die einen Zipperverschluss bilden und mit sich selbst durch Druck verrastbar sind. An der Knickkante 13 der ersten Seitenfalte 3 können die leistenförmigen Verschlusselemente 12 durch eine Ausstanzung oder einen Schnitt unterbrochen sein. Die Maßnahme verhindert ein Aufspreizen des Seitenfaltenbereiches in Folge einer Biegebeanspruchung der leistenförmigen Vorsprünge der Verschlusselemente 12. Neben dem dargestellten durchgehenden mit sich selbst verrastbaren Wiederverschlussstreifen 7 können auch an der Front- und Rückfläche 1, 2 einerseits und der ersten Seitenfalte 3 andererseits einander zugeordnete Wiederverschlussstreifenabschnitte vorgesehen sein, die voneinander getrennt sind.

Die Länge des Wiederverschlussstreifens 7 ist größer als die Breite der ersten Seitenfalte 3, wobei ein mittlerer Abschnitt des Wiederverschlussstreifens 7 an der Innenfläche der Seitenfalte 3 befestigt ist und wobei daran beidseitig anschließende Endabschnitte des Wiederverschlussstreifens 7 mit der Innenseite der Frontfläche 1 bzw. der Rückfläche 2 des Beutels verbunden sind.

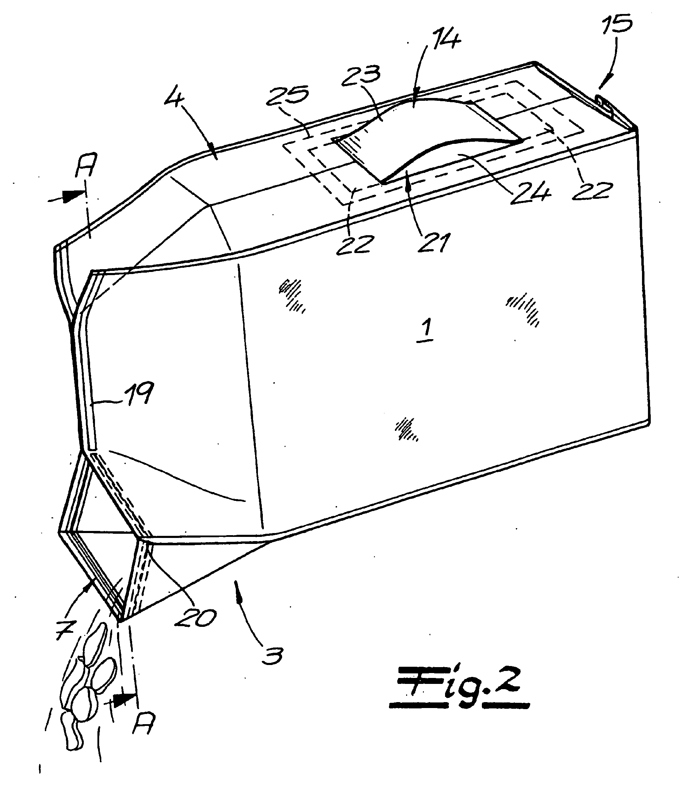

An der zweiten Seitenfalte 4 ist ein Tragegriff 14 angeordnet, der wie in Fig. 2 dargestellt, ein leichtes Ausschütten von Füllgut durch ein leichtes Verkippen ermöglicht. Der Tragegriff 14 entlang der zweiten Seitenfalte 4 ist mittig oder außermittig zum Boden 15 des Folienverpackungsbeutels versetzt angeordnet.

Die Beutelfolie, aus der der Folienverpackungsbeutel gefertigt ist, ist eine zumindest zweischichtige Verbundfolie, die an der Beutelinnenseite eine erste Schicht 16 aus einem siegelfähigen Kunststoff und an der Beutelaußenseite eine vorzugsweise bedruckte zweite Schicht 17 aus einem nicht siegelfähigen Material aufweist. Als Polymer für die erste Schicht 16 sind insbesondere Polyolefine wie beispielsweise Polyethylen, Polypropylen, Polyethylen-Copolymer, Polypropylen-Copolymer sowie Mischungen dieser Polymere geeignet. Die zweite Schicht 17 besteht vorzugsweise aus Polyester, biaxial orientiertem Polypropylen (BOPP) oder einem orientierten Polyamid (OPA). Die genannten Materialien sind innenseitig und außenseitig bedruckbar. Die Verbundfolie kann eine oder mehrere Zwischenschichten aufweisen, z. B. eine dünne Metallschicht zur Verbesserung der Barrierewirkung in Bezug auf die Sauerstoffdurchlässigkeit, die Wasserdampfdurchlässigkeit und die Durchlässigkeit von Aromen. Im Rahmen der Erfindung liegt aber auch, dass die Beutelfolie mehrlagig vollständig aus Polyethylen gebildet ist, wobei dann der Folienverpackungsbeutel besonders leicht zu entsorgen ist. Die Schwächungslinie 9 zum Öffnen des Folienverpackungsbeutels besteht aus einer Kombination einer durch Heißsiegeln gebildeten Prägelinie und einer in die Außenschicht der Verbundfolie eingebrachten und die Prägelinie überlagernden Lasernaht.

Im Ausführungsbeispiel der Fig. 1 erstreckt sich die Schwächungslinie 9 parallel zu dem Wiederverschlussstreifen 7 und läuft dann in einem vertikalen Abschnitt zur Kopfsiegelnaht 6 aus. Die Frontfläche 1 und die Rückfläche 2 des Folienbeutels sind durch eine vertikale Siegelnaht 18 verbunden, die an die Enden des Wiederverschlussstreifens 7 angrenzt und sich bis zur Kopfsiegelnaht 6 erstreckt. Im Ausführungsbeispiel der Fig. 2 erstreckt sich die Schwächungslinie 9 parallel zu dem Wiederverschlussstreifen 7 und einer daran anschließenden Quersiegelnaht 19, welche den Füllraum oberseitig abschließt, über die gesamte Breite des Folienbeutels bis zu den Rändern der zweiten Seitenfalte 4. Dort wo die Schwächungslinie 9 die durch Längssiegelnähte verstärkten Faltkanten 10 erreicht, sind Kerben 20 in den Längssiegelnähten zur Rissinitiierung vorgesehen.

Für die Ausgestaltung des Tragegriffs 14 ergeben sich im Rahmen der vorliegenden Erfindung unterschiedliche Ausführungsmöglichkeiten, die exemplarisch in den Figuren dargestellt sind. Fig. 1 zeigt eine besonders einfache Ausgestaltung, bei der ein separater Folienstreifen 21 außen auf die zweite Seitenfalte 4 durch Kleben oder bei einer heißsiegelbaren Ausgestaltung mit der Außenfläche des Folienverpackungsbeutels durch Heißsiegeln befestigt ist.

Bei der Ausgestaltung gemäß Fig. 2 ist als Tragegriff 14 ein Folienstreifen 21 vorgesehen, der mit seinen Enden 22 an der Innenseite der zweiten Seitenfalte 4 aufgesiegelt ist, wobei ein mittiger Griffabschnitt 23 des Folienstreifens 21 durch eine Öffnung 24 in der zweiten Seitenfalte 4 zugänglich ist. Der Bereich des Tragegriffs 14 ist dabei an der Beutelinnenfläche von einem Abdeckfolienabschnitt 25 abgedeckt.

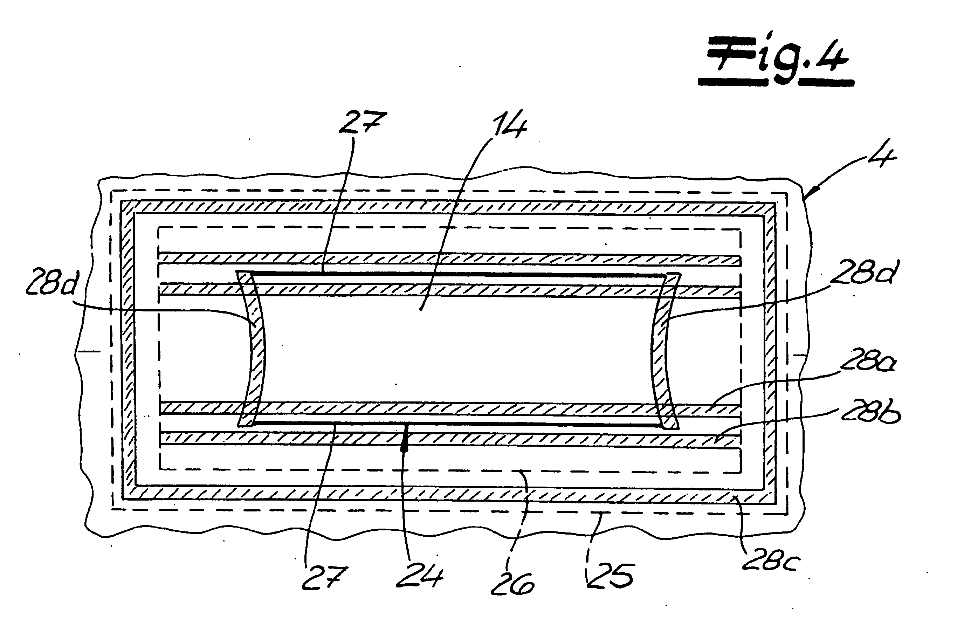

Fig. 4 zeigt eine Detailansicht einer alternativen Ausgestaltung des Tragegriffs 14. Im Bereich des Tragegriffs 14 ist ein Verstärkungsblatt 26 an der Beutelinnenseite befestigt, wobei der Tragegriff 14 aus einem randseitig von zwei Schlitzen 27 begrenzten Abschnitt der Beutelfolie und des Verstärkungsblattes 26 gebildet ist. Die Schlitze 27 sind jeweils zwischen zwei Siegelnähten 28a, 28b angeordnet, mit denen das Verstärkungsblatt 26 auf die Innenfläche der Beutelfolie aufgesiegelt ist. Durch die in Längsrichtung verlaufenden Siegelnähte 28a, 28b sind die Beutelfolie und das Verstärkungsblatt 26 im Bereich des Tragegriffes 14 und in dem Bereich, der an die durch den Tragegriff 14 gebildeten Öffnung 24 anschließt, fest verbunden, so dass eine gleichmäßige Verteilung der Traglast auf die Beutelfolie und das Verstärkungsblatt 26 erreicht wird. Das Verstärkungsblatt 26 ist an der Beutelinnenseite vollständig von einem Abdeckfolienabschnitt 25 abgedeckt. Der Abdeckfolienabschnitt 25 ist mit einer umlaufenden, geschlossenen Siegelnaht 28c, die das Verstärkungsblatt 26 umgibt, mit der Innenfläche der zweiten Seitenfalte 4 verbunden, wodurch ein zuverlässiger Verschluss des Folienverpackungsbeutels im Bereich des Tragegriffs 14 gewährleistet ist. Um ein Aufreißen der zwei gerade verlaufenden Schlitze 27 bei einer Belastung zu vermeiden, sind im Bereich der jeweils zueinander zugeordneten Enden der Schlitze 27 im Wesentlichen quer zu den Schlitzen verlaufende Siegelnähte 28d angeordnet. Die Siegelnähte 28d erstrecken sich jeweils von einem Ende eines Schlitzes 27 zu dem zugeordneten Ende des anderen Schlitzes und weisen eine Bogenform auf. Dadurch, dass die im Wesentlichen quer zu den Schlitzen 27 verlaufenden Siegelnähte 28d in Richtung des Tragegriffs 14 gebogen sind, wird die Traglast hauptsächlich in dem mittleren Bereich der Siegelnähte 28d aufgenommen, wodurch die Gefahr des Ausreißens des Tragegriffs 14 deutlich reduziert ist.

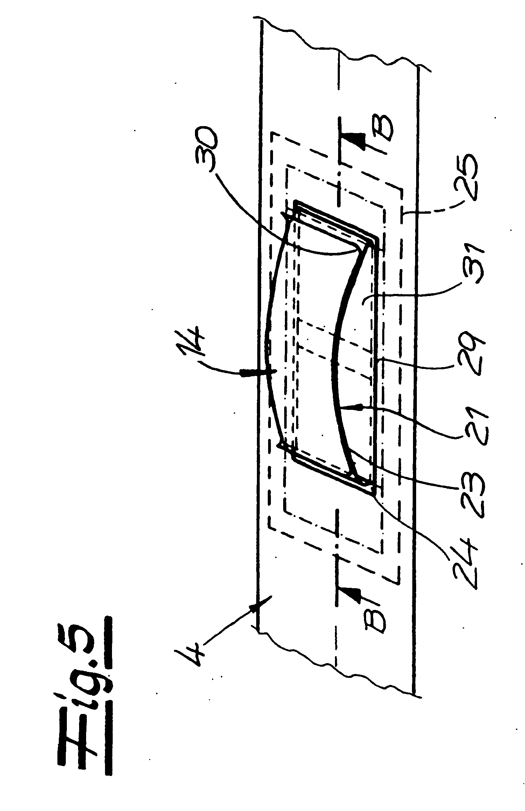

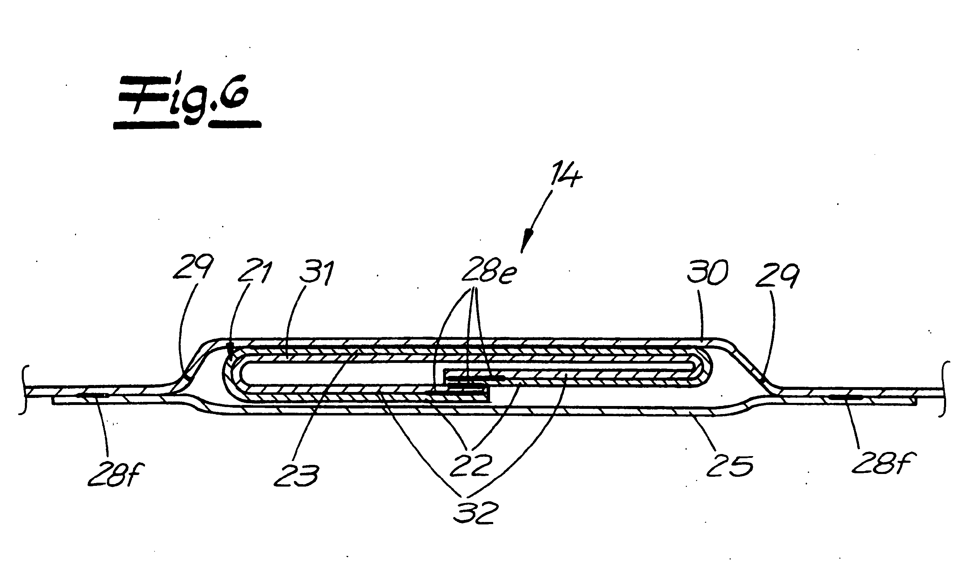

Eine weitere alternative Ausgestaltung des Tragegriffs 14 ist in Fig. 5 und Fig. 6 dargestellt. Der Tragegriff 14 weist einen Folienstreifen 21 mit einem Griffabschnitt 23 auf, wobei der Griffabschnitt 23 durch das Öffnen einer Schwächungslinie oder Perforation 29 freigegeben wird. Der von der Schwächungslinie oder Perforation 29 begrenzte Folienabschnitt 30 der Beutelfolie ist mit dem Griffabschnitt 23, vorzugsweise durch Heißsiegeln oder Kleben verbunden.

Fig. 6 zeigt eine Schnittdarstellung entlang der Linie B-B der Fig. 5, wobei jedoch die Perforation 29 oder Schwächungslinie noch nicht geöffnet ist und so der Griffabschnitt 23 innerhalb der zweiten Seitenfalte 4 des Folienverpackungsbeutels verborgen angeordnet ist. Der Folienstreifen 21 ist auf einem Trägerblatt 31 angeordnet, wobei Endabschnitte 32 des Trägerblattes 31 mit Streifenenden 22 des Folienstreifens 21 zur Beutelinnenseite gefaltet sind, so dass der Folienstreifen 21 das Trägerblatt 31 mit seinen beidseits des Griffabschnittes 23 anschließenden Streifenenden 22 umgreift. Die Streifenenden 22 überlappen sich abschnittsweise und sind einerseits mit den Endabschnitten 32 des Trägerblatts 31 und andererseits über eine Lage des Trägerblattes 31 miteinander durch Siegelnähte 28e verbunden. Der Folienstreifen 21 bildet dabei eine geschlossene Schlaufe, wodurch eine sehr hohe Traglast des Tragegriffs 14 erreicht wird. Das Trägerblatt 31 und der Folienstreifen 21 sind an der Beutelinnenseite von einem Abdeckfolienabschnitt 25 abgedeckt. Beim Tragen des Folienverpackungsbeutels an dem Tragegriff 14 wird die Gewichtskraft des Folienverpackungsbeutels von dem Folienstreifen 21 auf das Trägerblatt 31 verteilt, wobei das Trägerblatt 31 direkt oder über den Abdeckfolienabschnitt 25 seitlich des Folienstreifens 21 mit der Beutelinnenseite verbunden ist. Die Traglast wird dabei entlang der in Längsrichtung des Tragegriffs 14 und der zweiten Seitenfalte 4 verlaufenden Siegelnähte 28f verteilt, so dass auch bei großen Traglasten ein Ausreißen des Tragegriffes 14 vermieden werden kann.

## Patentansprüche

1. Folienverpackungsbeutel, der eine erste Seitenfalte (3) und eine zweite Seitenfalte (4), die zwischen einer Frontfläche (1) und einer Rückfläche (2) eingelegt sind, eine Kopfsiegelnaht (6) und zumindest eine Längssiegelnaht (5) aufweist,
wobei an der Beutelinnenfläche unterhalb der Kopfsiegelnaht (6) eine Wiederverschlusseinrichtung im Bereich der ersten Seitenfalte (3) angeordnet ist und
wobei die erste Seitenfalte (3) eine wiederverschließbare Schütte bildet, wenn ein Beutelabschnitt (8) oberhalb der Wiederverschlusseinrichtung zur Füllgutentnahme geöffnet wird,
wobei die Wiederverschlusseinrichtung die erste Seitenfalte (3) lösbar mit der benachbarten Frontfläche (1) und der Rückfläche (2) verbindet,
wobei die Außenkanten zwischen der ersten Seitenfalte (3) und der angrenzenden Front- bzw. Rückfläche (1, 2) als Faltkanten ausgebildet sind,
wobei die Faltkanten (10) zwischen der ersten Seitenfalte (3) und der Frontfläche (1) bzw. der Rückfläche (2) durch Längssiegelnähte versteift sind, die sich bis zur Kopfsiegelnaht (6) erstrecken,
wobei die Längssiegelnähte im Bereich der Wiederverschlusseinrichtung unterbrochen sind, und
wobei oberhalb der Wiederverschlusseinrichtung eine Schwächungslinie (9) vorgesehen ist,
**dadurch gekennzeichnet, dass** an der zweiten Seitenfalte (4) ein Tragegriff (14) angeordnet ist, der in Längsrichtung der zweiten Seitenfalte (4) mittig oder außermittig zu einem Boden (15) des Folienverpackungsbeutels versetzt angeordnet ist, und dass die Schwächungslinie (9) die durch Längssiegelnähte verstärkten Faltkanten erreicht, wobei dort Kerben (20) in den Längssiegelnähten zur Rissinitiierung vorgesehen sind.

2. Folienverpackungsbeutel nach Anspruch 1, **dadurch gekennzeichnet, dass** die Frontfläche (1), die Rückfläche (2) und die Seitenfalten (3, 4) durch Falten einer zumindest zweischichtigen Beutelfolie geformt sind, wobei die Beutelfolie an der Beutelinnenseite eine erste Schicht (16) aus einem siegelfähigen Kunststoff und an der Beutelaußenseite eine zweite Schicht (17) aus einem nicht siegelfähigen Material aufweist.

3. Folienverpackungsbeutel nach Anspruch 2, **dadurch gekennzeichnet, dass** die zweite Seitenfalte (4) zwei Schlitze (27) aufweist, wobei der Tragegriff (14) aus dem randseitig von den Schlitzen (27) begrenzten Abschnitt der Beutelfolie gebildet ist und wobei der Bereich des Tragegriffes (14) an der Beutelinnenfläche von zumindest einem Abdeckfolienabschnitt (25) abgedeckt ist.

4. Folienverpackungsbeutel nach Anspruch 3, **dadurch gekennzeichnet, dass** im Bereich des Tragegriffs (14) ein Verstärkungsblatt (26) an der Beutelinnenseite befestigt ist, wobei der Tragegriff (14) aus einem randseitig von den Schlitzen (27) begrenzten Abschnitt der Beutelfolie und des Verstärkungsblattes (26) gebildet ist.

5. Folienverpackungsbeutel nach Anspruch 1 oder 2, **dadurch gekennzeichnet, dass** der Tragegriff (14) von einem Folienstreifen (21) gebildet ist, der direkt oder über ein Trägerblatt (31) an der Innenseite der zweiten Seitenfalte (4) befestigt ist und der bei Gebrauch durch eine Öffnung (24) in der zweiten Seitenfalte (4) zugänglich ist, wobei der Bereich des Tragegriffs (14) an der Beutelinnenfläche von zumindest einem Abdeckfolienabschnitt (25) abgedeckt ist.

6. Folienverpackungsbeutel nach Anspruch 5, **dadurch gekennzeichnet, dass** der Folienstreifen (21) über ein Trägerblatt (31), welches breiter als der Folienstreifen (21) ist, mit der Beutelinnenseite verbunden ist, wobei der Folienstreifen (21) in Längsrichtung zwischen zwei um das Trägerblatt (31) gefalteten Streifenenden (22) einen mittigen Griffabschnitt (23) aufweist und wobei das Trägerblatt (31) seitlich des Folienstreifens (21) mittelbar oder unmittelbar mit der Beutelinnenseite verbunden ist.

7. Folienverpackungsbeutel nach Anspruch 1, **dadurch gekennzeichnet, dass** der Tragegriff (14) auf die Außenseite der zweiten Seitenfalte (4) aufgesetzt ist.

8. Folienverpackungsbeutel nach einem der Ansprüche 1 bis 7, **dadurch gekennzeichnet, dass** an die Enden der Wiederverschlusseinrichtung eine Siegelnaht (18, 19) angrenzt, welche die Frontfläche (1) und Rückfläche (2) des Folienverpackungsbeutels verbindet und sich bis zur Kopfsiegelnaht (6) oder bis zur zweiten Seitenfalte (4) erstreckt und dass zum erstmaligen Öffnen des geschlossenen Folienverpackungsbeutels eine Schwächungslinie (9) versehen ist, die aus der Kombination einer durch Heißsiegeln gebildeten Prägelinie und einer die Prägelinie überlagernden Lasernaht besteht.

9. Folienverpackungsbeutel nach einem der Ansprüche 1 bis 8, **dadurch gekennzeichnet, dass** die Wiederverschlusseinrichtung durch einen mit sich selbst verriegelbaren Wiederschlussstreifen (7) gebildet ist.

10. Folienverpackungsbeutel nach Anspruch 9, **dadurch gekennzeichnet, dass** der Wiederverschlussstreifen (7) leistenförmige Verschlusselemente (12) aufweist.

11. Folienverpackungsbeutel nach einem der Ansprüche 1 bis 8, **dadurch gekennzeichnet, dass** die Wiederverschlusseinrichtung aus einem männlichen Wiederverschlussstreifen mit mindestens einem Vorsprung und einem zugeordneten weiblichen Wiederverschlussstreifen mit zumindest einer Aufnahme für den Vorsprung gebildet ist.

12. Folienverpackungsbeutel nach einem der Ansprüche 1 bis 11, **dadurch gekennzeichnet, dass** vor dem Öffnen des Folienverpackungsbeutels an dem oberhalb der Wiederverschlusseinrichtung angeordneten Beutelabschnitt (8) die Wiederverschlusseinrichtung geschlossen ist.

13. Folienverpackungsbeutel nach einem der Ansprüche 1 bis 12, **dadurch gekennzeichnet, dass** die von der ersten Seitenfalte (3) gebildete Schütte zur Ermöglichung des Wiederschlusses zwischen die Frontfläche (1) und die Rückfläche (2) einklappbar ist.

## Claims

1. A plastic film packaging bag comprising a first side fold (3) and a second side fold (4) inserted between a front surface (1) and a rear surface (2), a top sealing seam (6) and at least one longitudinal sealing seam (5),
wherein on the inside surface of the bag below the top sealing seam (6) a reclosure device is arranged in the area of the first side fold (3) and
wherein the first side fold (3) forms a reclosable chute when a bag portion (8) above the reclosure device is opened for product removal,
wherein the reclosure device releasably connects the first side fold (3) with the adjacent front surface (1) and the rear surface (2),
wherein the outer edges between the first side fold (3) and the adjacent front or rear surface (1, 2) are designed as folding edges,
wherein the folding edges (10) between the first side fold (3) and the front surface (1) or the rear surface (2) are reinforced by longitudinal sealing seams which extend as far as the top sealing seam (6),
wherein the longitudinal sealing seams are interrupted in the area of the reclosure device, and
wherein a tear line (9) is provided above the reclosure device,
**characterised in that** a carrying handle (14) is provided on the second side fold (4), which carrying handle is offset centrally or eccentrically to a bottom (15) of the plastic film packaging bag in longitudinal direction of the second side fold (4), and **in that** the tear line (9) reaches the folding edges reinforced by the longitudinal sealing seams, wherein notches (20) are provided at this point in the longitudinal sealing seams for initiating the tear.

2. Plastic film packaging bag according to claim 1, **characterised in that** the front surface (1), the rear surface (2) and the side folds (3, 4) are formed by folds of an at least two-layer bag film, wherein the bag film, on the inside of the bag, comprises a first layer (16) from a sealable plastic and on the outside of the bag, comprises a second layer (17) from a non-sealable material.

3. Plastic film packaging bag according to claim 2, **characterised in that** the second side fold (4) comprises two slots (27), wherein the carrying handle (14) is formed of the portion of the bag film limited on the rim-side by the slots (27) and wherein the area of the carrying handle (14) on the inside surface of the bag is covered by at least one covering film portion (25).

4. Plastic film packaging bag according to claim 3, **characterised in that** in the area of the carrying handle (14) a reinforcement leaf (26) is attached to the inside of the bag, where the carrying handle (14) is formed of the portion of the bag film limited on the rim-side by the slots (27) and of the reinforcement leaf (26).

5. Plastic film packaging bag according to claim 1 or 2, **characterised in that** the carrying handle (14) is formed by a film strip (21) which is attached directly or via a carrier leaf (31) to the inside of the second side fold (4) and which when being used is accessible through an opening (24) in the second side fold (4), wherein the area of the carrying handle (14) on the inside surface of the bag is covered by at least one covering film portion (25).

6. Plastic film packaging bag according to claim 5, **characterised in that** the film strip (21) is connected via a carrier leaf (31) wider than the film strip (21) with the inside of the bag, wherein the film strip (21), in longitudinal direction between two strip ends (22) folded about the carrier leaf (31), comprises a central grip portion (23) and wherein the carrier leaf (31) is connected indirectly or directly with the inside of the bag laterally of the film strip (21).

7. Plastic film packaging bag according to claim 1, **characterised in that** the carrying handle (14) is placed on the outside of the second side fold (4).

8. Plastic film packaging bag according to one of claims 1 to 7, **characterised in that** a sealing seam (18, 19) is provided adjacent to the ends of the reclosure device, which connects the front surface (1) and rear surface (2) of the plastic film packaging bag and extends as far as the top sealing seam (6) or the second side fold (4) and **in that** a tear line (9) is provided for the initial opening of the closed plastic film packaging bag which tear line consists of the combination of an embossed line formed by hot sealing and a laser seam overlaying the embossed line.

9. Plastic film packaging bag according to one of claims 1 to 8, **characterised in that** the reclosure device is formed by a self-lockable reclosure strip (7).

10. Plastic film packaging bag according to claim 9, **characterised in that** the reclosure strip (7) comprises ledge-type closure elements (12).

11. Plastic film packaging bag according to one of claims 1 to 8, **characterised in that** the reclosure device is formed of a male reclosure strip with at least one projection and an associated female reclosure strip with at least one receptor for the projection.

12. Plastic film packaging bag according to one of claims 1 to 11, **characterised in that** prior to opening the plastic film packaging bag at the bag portion (8) arranged above the reclosure device, the reclosure device is closed.

13. Plastic film packaging bag according to one of claims 1 to 12, **characterised in that** the chute formed by the first side fold (3) is foldable inwards between the front surface (1) and rear surface (2) for permitting reclosure.

## Revendications

1. Sachet d'emballage en film, qui comporte un premier pli latéral (3) et un deuxième pli latéral (4), qui sont insérés entre une surface frontale (1) et une surface arrière (2), une soudure de scellement de tête (6) et au moins une soudure de scellement longitudinale (5),
sur la surface intérieure du sachet, en-dessous de la soudure de scellement de tête (6) étant disposé un dispositif de refermeture, dans la zone du premier pli latéral (3) et
le premier pli latéral (3) formant une glissière refermable, lorsqu'on ouvre une partie du sachet (8) au-dessus du dispositif de refermeture, pour prélever du produit contenu,
le dispositif de refermeture reliant de façon amovible le premier pli latéral (3) avec la surface frontale (1) voisine et avec la surface arrière (2),
les arêtes extérieures entre le premier pli latéral (3) et la surface frontale ou la surface arrière adjacente (1, 2) étant conçues en tant qu'arêtes pliables,
les arêtes pliables (10) étant rigidifiées entre le premier pli latéral (3) et la surface frontale (1) ou la surface arrière (2) par des soudures de scellement longitudinales, qui s'étendent jusqu'à la soudure de scellement de tête (6),
les soudures de scellement longitudinales étant interrompues dans la zone du dispositif de refermeture et
au-dessus du dispositif de refermeture étant prévue une ligne d'affaiblissement (9),
**caractérisé en ce que** sur le deuxième pli latéral (4) est disposée une poignée de transport (14), qui en direction longitudinale du deuxième pli latéral (4) est disposée en étant déportée au centre ou de façon excentrée par rapport à un fond (15) du sachet d'emballage en film, et **en ce que** la ligne d'affaiblissement (9) atteint les arêtes pliables renforcées par les soudures de scellement longitudinales, des encoches (20) étant prévues dans les soudures de scellement longitudinales pour l'initiation de la déchirure.

2. Sachet d'emballage en film selon la revendication 1, **caractérisé en ce que** la surface frontale (1), la surface arrière (2) et les plis latéraux (3, 4) sont formés par des plis d'un film à sachet à au moins deux couches, le film à sachet comportant sur la face intérieure du sachet une première couche (16) en une matière plastique scellable et une deuxième couche (17) en une matière non scellable.

3. Sachet d'emballage en film selon la revendication 2, **caractérisé en ce que** le deuxième pli latéral (4) comporte deux entailles (27), la poignée de transport (14) étant formée à partir de la partie du film à sachet délimitée côté marginal par les entailles (27) et la zone de la poignée de transport (14) sur la surface intérieure du sachet étant recouverte par au moins une partie de film de recouvrement (25).

4. Sachet d'emballage en film selon la revendication 3, **caractérisé en ce que en ce que** dans la zone de la poignée de transport (14), une feuille de renfort (26) est fixée sur la face intérieure du sachet, la poignée de transport (14) étant formée d'une partie du film à sachet et de la feuille de renfort (26) délimitée côté marginal par les entailles (27).

5. Sachet d'emballage en film selon la revendication 1 ou 2, **caractérisé en ce que** la poignée de transport (14) est formée d'une bande de film (21), qui est fixée directement ou par l'intermédiaire d'une feuille support (31) sur la face intérieure du deuxième pli latéral (4) et qui à l'utilisation est accessible par une ouverture (24) dans le deuxième pli latéral (4), la zone de la poignée de transport (14) étant recouverte sur la surface intérieure du sachet par au moins une partie du film de recouvrement (25).

6. Sachet d'emballage en film selon la revendication 5, **caractérisé en ce que** la bande de film (21) est reliée à la face intérieure du sachet par une feuille support (31) qui est plus large que la bande de film (21), la bande de film (21) présentant en direction longitudinale, entre deux extrémités de bande (22) pliées autour de la feuille support (31) une partie centrale de poignée (23) et la feuille support (31) étant reliée directement ou indirectement avec la face intérieure du sachet, latéralement de la bande de film (21).

7. Sachet d'emballage en film selon la revendication 1, **caractérisé en ce que** la poignée de transport (14) est placée sur la face extérieure du deuxième pli latéral (4).

8. Sachet d'emballage en film selon l'une quelconque des revendications 1 à 7, **caractérisé en ce qu'**aux extrémités du dispositif de refermeture est adjacente une soudure de scellement (18, 19) qui relie la surface frontale (1) et la surface arrière (2) du sachet d'emballage en film et qui s'étend jusqu'à la soudure de scellement de tête (6) ou jusqu'au deuxième pli latéral (4) et **en ce que** pour la première ouverture du sachet d'emballage en film fermé, il est prévu une ligne d'affaiblissement (9) qui est constituée de l'association d'une ligne d'estampage formée par thermosoudage et d'une soudure au laser superposée à la ligne d'estampage.

9. Sachet d'emballage en film selon l'une quelconque des revendications 1 à 8, **caractérisé en ce que** le dispositif de refermeture est formé par une bande de refermeture (7) verrouillable avec elle-même.

10. Sachet d'emballage en film selon la revendication 9, **caractérisé en ce que** la bande de refermeture (7) comporte des éléments de fermeture (12) en forme de baguettes.

11. Sachet d'emballage en film selon l'une quelconque des revendications 1 à 8, **caractérisé en ce que** le dispositif de refermeture est formé d'une bande de refermeture mâle avec au moins une saillie et d'une bande de refermeture femelle associée, avec au moins un logement pour la saillie.

12. Sachet d'emballage en film selon l'une quelconque des revendications 1 à 11, **caractérisé en ce qu'**avant l'ouverture du sachet d'emballage en film sur la partie du sachet (8) disposée au-dessus du dispositif de refermeture, le dispositif de refermeture est fermé.

13. Sachet d'emballage en film selon l'une quelconque des revendications 1 à 12, **caractérisé en ce que** la glissière formée par le premier pli latéral (3) est rabattable entre la surface frontale (1) et la surface arrière (2) pour permettre la refermeture.
